(19) Europäisches Patentamt
European Patent Office
Office européen des brevets

(11) Publication number: **0 068 903**
**B1**

(12) **EUROPEAN PATENT SPECIFICATION**

(45) Date of publication of patent specification: **15.05.85**

(51) Int. Cl.[4]: **C 09 D 11/10**

(21) Application number: **82303439.2**

(22) Date of filing: **30.06.82**

(54) **Ink composition for ink jet printing.**

(30) Priority: **30.06.81 JP 102541/81**

(43) Date of publication of application: **05.01.83 Bulletin 83/01**

(45) Publication of the grant of the patent: **15.05.85 Bulletin 85/20**

(84) Designated Contracting States: **DE FR GB**

(56) References cited: **DE-A-2 845 375**

(73) Proprietor: **KONISHIROKU PHOTO INDUSTRY CO. LTD.**
**No. 26-2, Nishishinjuku 1-chome Shinjuku-ku**
**Tokyo 160 (JP)**

(72) Inventor: **Kobayashi, Tatsuhiko**
**2-22-24 Sumiyoshicho**
**Fuchu-shi Tokyo (JP)**
Inventor: **Kitamura, Shigehiro**
**2-5-19 Owadacho**
**Hachioji-shi Tokyo (JP)**

(74) Representative: **Ellis-Jones, Patrick George Armine et al**
**J.A. KEMP & CO. 14 South Square Gray's Inn**
**London WC1R 5EU (GB)**

**EP 0 068 903 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to an ink composition for use in ink jet printing. This invention particularly relates to an ink composition for ink jet printing, which comprises water-insoluble polymer latex particles impregnated with a hydrophobic dye, and more particularly to an ink composition for ink jet printing, which is suitable for the ink jet printing system wherein an ink projected from a nozzle by a sudden reduce in the internal volume of an ink chamber.

Recently, the conventional ink jet printing method wherein the information is printed on a printing medium by projecting an ink liquid in a controlled manner without bringing the printing head into contact with the printing medium has quickly become popular for use in a terminal printer or the like because of low noise, possibility of high-speed printing, and possibility of using plain paper.

The conventional ink jet printing systems include the ink jet system in which an ink projected from a vessel by a sharp reduce in the internal volume of the vessel or by pressing or suction at a specified pressure, the ink jet system in which an ink projected from a nozzle at a speed accelerated electrostatically by applying a signal voltage between the nozzle and the electrode positioned opposite thereto, and the ink mist system in which mist is generated by the oscillation of an ultrasonic wave.

Ink compositions to be used for the above-described types of ink jet printing systems or ink mist printing systems are required to exhibit the following characteristics:

i) The ink compositions should provide a sufficient density required for printing,

ii) The ink composition should not evaporate and dry in the jet nozzle, causing clogging of the jet nozzle,

iii) The ink droplets should dry immediately after attched to and formed on paper,

iv) The printed ink should not bleed due to water and sweat, or the printed section should not disappear, and

v) The ink compositions should not exhibit a change in physical properties nor form precipitates during storage.

In a conventional method for satisfying the quick drying characteristics of an ink, use is made of an ink, which sparingly evaporates, and highly permeable paper such as blotting paper, and the ink is allowed to permeate through the paper to obtain apparent dry state. With this method, the ink scarcely clogs by the ink evaporation in the nozzles. However, the material of the paper must be highly permeable to the ink and, therefore, only the paper designated by the manufacturer can be used. As a result, the conventional method is disadvantageous in that the paper is relatively expensive.

In another method for satisfying the quick drying characteristics of an ink, a solvent having a relatively high vapor pressure is added to the ink, and the ink is allowed to dry through evaporation of the solvent. With this conventional method, the quick drying characteristics can be satisfied, but the ink dries through evaporation of the solvent and clogs at the front end of the nozzle at the time of stoppage of the equipment or the like if the ink jet nozzle has a diameter of as small as about 50 to 100 μm ϕ as in the case of an ink jet printer. For this reason, the ink must be prevented from evaporating and drying in the nozzle, for example, by mounting a cover on the front end of the nozzle when the equipment is stopped.

The conventional ink composition generally used for ink jet printing consists of a water-soluble dye, a polyhydric alcohol and water. The ink composition further contains a surface active agent, mildew proofing agent, or the like as required. The ink composition is prevented from clogging the nozzle by the addition of a polyhydric alcohol which is nonvolatile and highly hygroscopic. With the conventional ink composition, however, the quick drying characteristics of the printed ink are not satisfied, and it is necessary to use highly permeable paper as mentioned above or to install a heating unit such as electric heater at the paper supporting base for the purpose of promoting evaporation and drying.

German Patent 2,845,375 discloses a method for preparing a latex-impregnated composition but no organic solvent is added after removing the dyeing solvent. In such a method it is not possible, for example, to control the viscosity of the ink or the rate of permeation of the ink into paper.

To eliminate the above-mentioned disadvantages of the conventional methods, the present invention intends to impart the property of drying immediately when the ink applied to the paper, which properties conflict with each other, to the ink itself so as to provide an ink for use in ink jet printing which can be printed satisfactorily on any kind of paper.

The primary object of the present invention is to provide an ink composition for ink jet printing, which does not clog the nozzle and which exhibits quick drying characteristics.

This object is accomplished by an ink composition for ink jet printing (hereinafter referred to the ink of the present invention) comprising vinyl polymer latex particles which contain a hydrophobic dye and which are essentially insoluble in and non-swelling in water, an organic solvent having a hydrophilic-lipophilic balance (hereinafter referred to as the HLB) of 9.5 or less, and an aqueous medium.

The present invention will hereinbelow be described in further detail.

In the case of ink jet printing, the ink droplet ejected to the paper is considered to pass through the processes of wetting and permeating through the paper. Of these processes, permeation can be regarded as a chromatographic phenomenon. With the conventional ink composition containing a dye uniformly dissolved in a medium, the ink droplet exhibits its density bothg in the wetting and permeating regions.

In contrast with the above-mentioned homogeneous ink composition, in a heterogeneous or dispersion type ink composition containing a dye in a medium in the undissolved form, mainly the medium participates in the permeation, and the ink droplet ejected to the paper exhibits its density only in the wetting region. Therefore, the dispersion type ink composition exhibits little spreading of the ink droplet, yielding a high-density print with little bleeding.

However, the dispersion type ink composition is disadvantageous in that the permeation speed through the printing paper called the plain paper is slow and the ink composition does not dry quickly if the water-miscible solvent used in the aqueous medium is a conventionally used one such as ethylene glycol.

The inventors have found that, if a water-miscible solvent having an HLB value of 9.5 or less is used in the aqueous medium, the aqueous medium exhibits very excellent permeability through paper, and separation between the color material and the medium occurs satisfactorily, giving a high-quality print with little spreading and little bleeding.

On the other hand, the dispersion type ink composition acts advantageously over the homogeneous type with respect to clogging of the front end of the nozzle of the recording equipment due to drying of the ink composition. Namely, it is generally known that the existence of a disperse phase causes the evaporation speed of the medium to decelerate and that the smaller the particle size of the disperse phase is, the slower the evaporate speed of the medium becomes. Further, in the case of the homogeneous ink composition, clogging at the front end of the nozzle due to drying of the ink composition occurs because the vehicle component changes due to evaporation and it becomes impossible to maintain the dye dissolving property. Contrarily, with the ink composition of the present invention, the stability with respect to the medium depends on the latex particles instead of the dye and, therefore, it is expected that the tolerance can be increased.

Further, it is desirable that the above-mentioned water-miscible solvent has the slow-evaporating property for the reason described above. The slow-evaporating solvent indicates the solvent which does not present the above-mentioned problem when the ink is formulated, and the solvent which is defined in the present invention and has a boiling point of 100°C or higher, preferably 150°C or higher.

It is necessary that the solvent used in the present invention has an HLB value of 9.5 or less depending on the degree of sizing of the printing paper. On the other hand, solvents having an HLB value of 7.0 or less exhibit lower miscibility with water, but some of such solvents can exhibit sufficient miscibility with water and can be used in the present invention. In the present invention, the HLB value of 9.5 or less is the value exhibited by the solvent when the solvent is a single solvent, and is the value of the whole solvent mixture when the mixture is a solvent mixture. Namely, the respective solvents of a solvent mixture need not always have an HLB value of 9.5 or less. It is necessary only that the HLB value of the whole solvent mixture obtained by mixing several solvents is 9.5 or less.

The HLB value of the solvent used in the present invention is 9.5 or less, preferably 9.5 to 7.0. The HLB value can be measured by various methods and differs according to the measuring method employed. In the present invention, the HLB value is defined to be expressed by the following formula:

$$HLB = 7 + (\text{basic number of hydrophilic groups}) - (\text{basic number of hydrophobic groups})$$

In the formula mentioned above, the number of hydrophilic groups and that of hydrophobic groups are derived from the study on the rate of coalescence of emulsifying phenomena. The typical values are listed in Table 1 below.

TABLE 1

| Hydrophilic group | Basic Number | Hydrophobic group | Number of groups |
|---|---|---|---|
| $-SO_3Na$ | 38.7 | $-CH_2-$ | −0.475 |
| $-COOK$ | 21.1 | $CH_3-$ | −0.475 |
| $-COONa$ | 19.1 | $=CH-$ | −0.475 |
| N (quaternary ammonium salt) | 9.4 | $-(CH_2-CH_2-O)-$ | +0.33 |
| Ester (sorbitan ring) | 6.8 | $-(CH_2-CH(CH_3)-O)-$ | +0.15 |
| Ester (free) | 2.4 | | |
| $-COOH$ | 2.1 | | |
| $-OH$ (free) | 1.9 | | |
| $-O-$ | 1.3 | | |
| $-OH$ (sorbitan ring) | 0.5 | | |

The measuring methods for HLB are described in detail by Davies in Proc. 2nd Intern. Congress of Surface Activity, *1*, 426 (1957), and by Okada in Yukagaku (Oil Chemistry), *7*, 434, (1958).

The solvents having an HLB value of 9.5 or less which are used in the present invention include monohydric or polyhydric alcohols and their derivatives, cyclic ethers, lactones or the like. Examples of the polyhydric alcohols are (mono, di, tri, tetra) alkylene glycols, and the examples of polyhydric alcohol derivatives are (mono, di, tri, tetra) ethylene glycol alkyl ethers, (mono, di, tri, tetra) ethylene glycol alkyl ether acetates, fatty acid glycerine esters, sorbitan esters or the like.

The typical solvents used in the present invention and their HLB values are listed in Table 2 below. However, the solvents used in the present invention are not limited to these solvents.

TABLE 2

| Solvent | HLB |
|---|---|
| Propylene glycol | 9.375 |
| Dipropylene glycol | 9.25 |
| Tripropylene glycol | 9.125 |
| Butane-1,4-diol | 8.90 |
| Pentane-1,5-diol | 8.425 |
| 2-methyl-pentane-2,4-diol | 7.95 |
| Ethylene glycol monoethyl ether | 8.30 |
| Ethylene glycol monobutyl ether | 7.25 |
| Diethylene glycol monomethyl ether | 9.125 |
| Diethylene glycol dimethyl ether | 8.05 |
| Diethylene glycol monoethyl ether | 8.65 |
| Diethylene glycol diethyl ether | 7.10 |
| Triethylene glycol monomethyl ether | 9.475 |
| Triethylene glycol monoethyl ether | 9.00 |
| Tetraethylene glycol dimethyl ether | 8.75 |
| Furfuryl alcohol | 7.825 |
| Tetrahydroxy furfuryl alcohol | 7.825 |
| Dioxane | 7.70 |
| γ-Butyrolactone | 7.50 |
| γ-Valerolactone | 7.025 |

The HLB values listed above are those determined by the method described by Davies in Proc. 2nd Intern. Congress of Surface Activity, *1*, 426 (1957).

The main purpose of the use of a combination of two or more solvents is to adjust the viscosityt of the ink and to control the speed of permeation of the medium through the recording paper.

The proportion of the above-described solvent with respect to water in the aqueous medium of the ink of the present invention may be of any value, provided that the drying property of the ink at the front end of the nozzle, drying property thereof on the printing paper, dispersion stability of the latex particles, or the like are satisfied. Generally, the proportion of the solvent is 95 to 20 per 5 to 80 of water, preferably 80 to 60 per 20 to 60 of water.

The vinyl polymer latex containing a hydrophobic dye, which is used in the present invention, may be prepared by any method capable of incorporating a hydrophobic dye to the latex particles in an amount providing a sufficient density necessary for printing. For example, the vinyl polymer latex may be impregnated with the hydrophobic dye in accordance with the method of impregnating the vinyl polymer latex with a hydrophobic material as described in United States Patent No. 4,199,363, British Patent Publication No. 2003486A, Japanese Patent O.P.I. Publication No. 137131/1978 and 50240/1980 or the like.

The vinyl polymer latex used in the present invention may be of any composition, provided that it can contain the hydrophobic dye in an amount yielding a sufficient printing density necessary as an ink composition and is stable in the above-described aqueous medium.

It is preferable that the polymer particles contained in the vinyl polymer latex in accordance with the present invention be synthesized from a radical-polymerizable vinyl monomer by the emulsion

polymerization. Examples of the monomers are listed below, but the present invention is not limited to the use of these monomers.

1) Acrylic ester compounds
Methyl acrylate, ethyl acrylate, butyl acrylate, dodecyl acrylate, glycidyl acrylate, 2-acetoacetoxyethyl acrylate, etc.

2) Methacrylic ester compounds
Methyl methacrylate, ethyl methacrylate, butyl methacrylate, dodecyl methacrylate, glycidyl methacrylate, 2-acetoacetoxyethyl methacrylate, etc.

3) Acrylamides
Butylacrylamide, N,N-diethylacrylamide, N,N-diisopropylacrylamide, dodecylacrylamide, etc.

4) Methacrylamides
Butylmethacrylamide, N,N-diethylmethacrylamide, N,N-diisopropylmethacrylamide, dodecylmethacrylamide, etc.

5) Vinyl ester compounds
Vinyl acetate, vinyl butylate, etc.

6) Vinyl halide compounds
Vinyl chloride, etc.

7) Vinylidene halide compounds
Vinylidene chloride, etc.

8) Vinyl ether compounds
Vinyl methyl ether, vinyl ethyl ether, vinyl hexyl ether, vinyl glycidyl ether, etc.

9) Styrene compounds
Styrene, α-methylstyrene, hydroxystyrene, chlorostyrene, methylstyrene, etc.

10) Other compounds
Ethylene, propylene, butylene, butadiene, isoprene, acrylonitrile, etc; divinylbenzene, allyl acrylate, allyl methacrylate, N-allylmethacrylamide, 4,4'-isopropylidenediphenyl diacrylate, 1,3-butylene diacrylate, 1,3-butylene dimethacrylate, 1,4-cyclohexylene-dimethylene dimethacrylate, diethyleneglycol dimethacrylate, diisopropyleneglycol dimethacrylate, divinyloxymethylene, ethylene diacrylate, ethylene dimethacrylate, ethylidene diacrylate, ethylidene dimethacrylate, 1,6-diacrylamidehexane, 1,6-hexamethylene diacrylate, 1,6-hexamethylene dimethacrylate, N,N'-methylenebisacrylamide, neopentylglycol dimethacrylate, phenylethylene dimethacrylate, tetraethyleneglycol dimethacrylate, tetramethylene diacrylate, tetramethylene dimethacrylate, 2,2,2-trichloroethylidene dimethacrylate, triethyleneglycol diacrylate, trimethyleneglycol dimethacrylate; compounds having hydrophilic groups

(1) 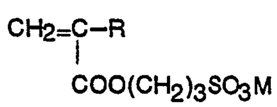

(2) 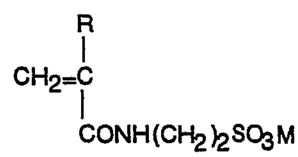

(3) 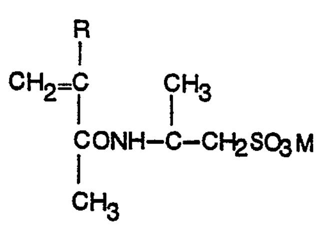

(4) 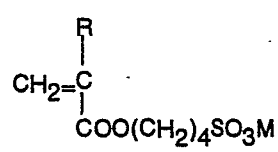

(5) 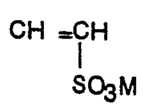

(6) 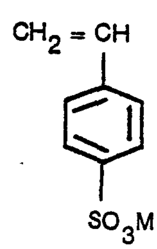

(7) 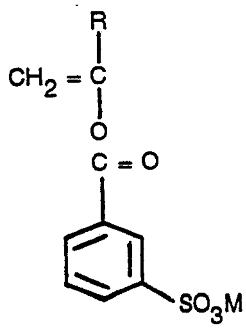

(8) 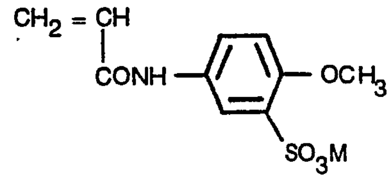

(9) 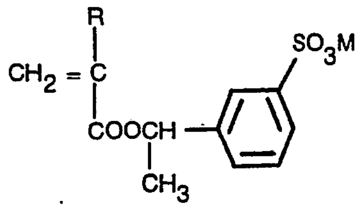

(10) 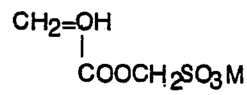

(11) 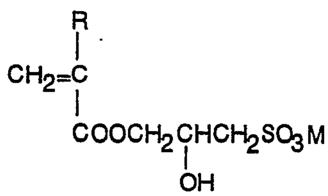

(12) 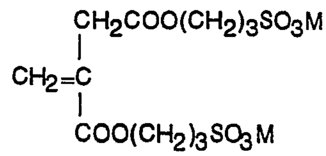

(13) 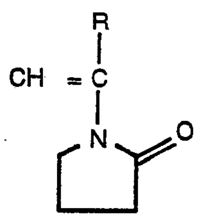

(14) 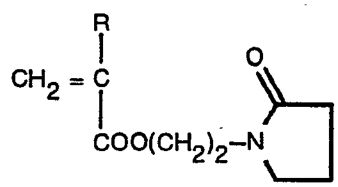

(15) 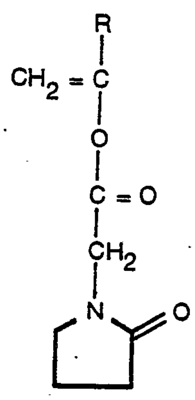

(16) 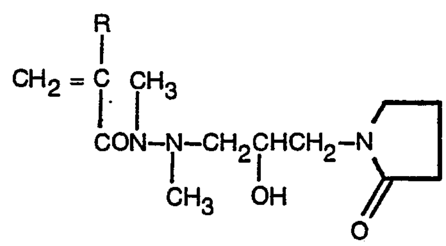

(17) 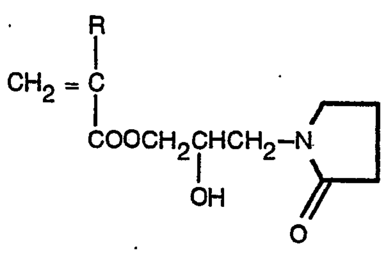

(18) 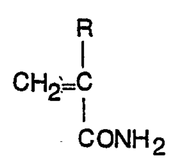

(19)

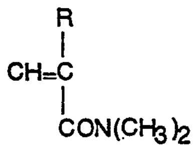

(20)

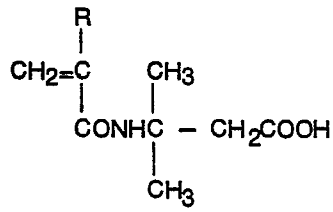

(21)

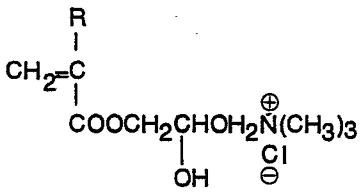

(22)

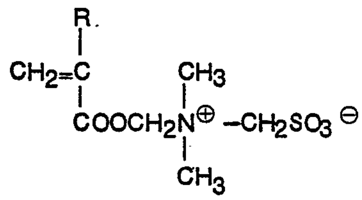

(23)

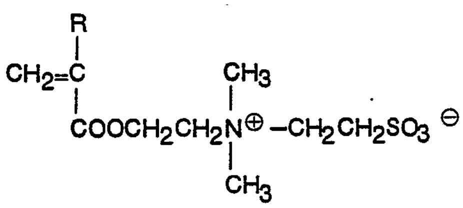

(24)

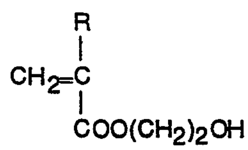

(25)

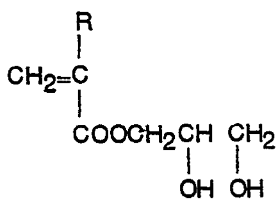

(26)

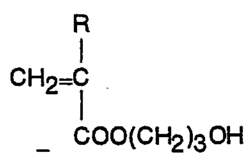

(27)

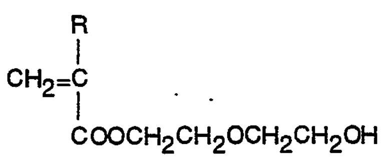

(28)

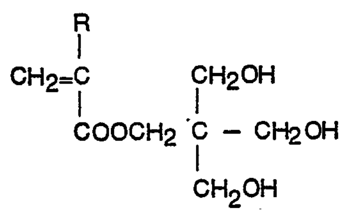

(29)

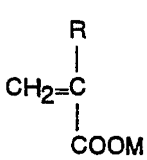

(30)

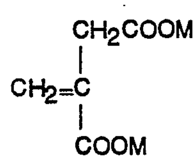

(31)

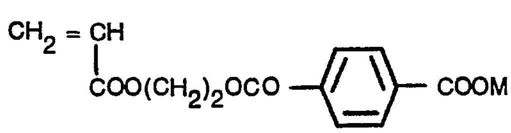

(32)

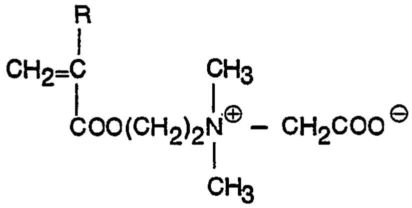

(33)

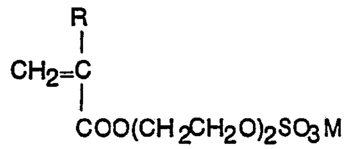

(34)

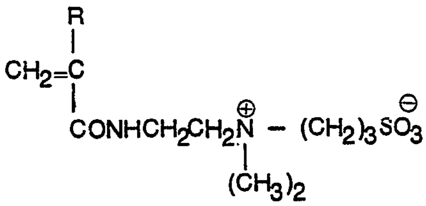

(35)

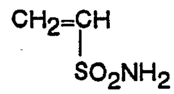

(36)

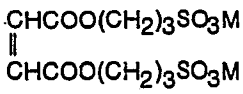

(37)

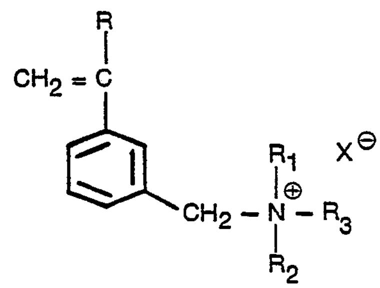

(38)

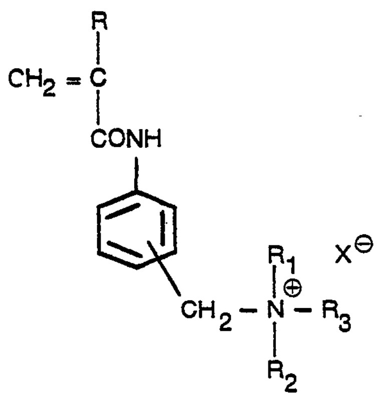

(39)

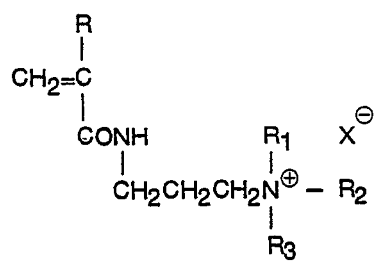

(40)

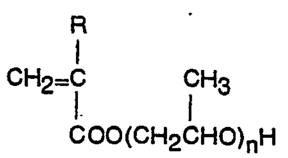

n = 1~10

(41)

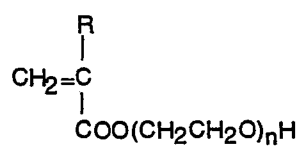

n = 1~10

In the formulas described above, R designates hydrogen atom or a lower alkyl group, and M denotes an alkali metal, hydrogen atom or $—NH_4$. $R_1$, $R_2$ and $R_3$ are independently selected from the group consisting of a carbocyclic group having from 5 to 12 carbon atoms, for example, aryl, aralkyl and cyclohexyl such as benzyl, phenyl, p-methylbenzyl, cyclohexyl, cyclopentyl, etc.; and an alkyl group having from 1 to 12 carbon atoms, for example, methyl, ethyl, propyl, isobutyl, pentyl, hexyl, heptyl, decyl and so on. Preferably, $R_1$ and $R_2$ each denote methyl, and $R_3$ denotes benzyl.

$X^{\ominus}$ is an anion, i.e., an anion of an anionic salt in which an ionic free radical forms an atom, such as halide (e.g., bromide or chloride), sulfate, alkyl sulfate, sulfonate of alkane or allene (e.g., p-toluene sulfonate), acetate, phosphate, dialkylphosphate or homologues thereof.

Among the above compounds having hydrophilic groups, the compounds having a sulfonate group, a

polyoxyethylene group and a quaternary ammonium group are preferred. Particularly preferred are the Compounds (3), (38) and (41).

The polymer particles contained in the vinyl polymer latex in accordance with the present invention may further contain cross-linkable monomer. As preferred example of the cross-linkable monomer, divinyl benzene is mentioned.

The vinyl polymer latex particles used in the present invention can be prepared by subjecting the vinyl monomer to degasification-nitrogen substitution in an aqueous medium containing a dispersing agent (surface active agent) for emulsion polymerization in an amount of about 0.1 to 20% by weight based on said vinyl monomer and water in an amount of about 2 to 50% by weight, emulsifying, adding an additive (e.g., molecular weight adjusting agent or antioxidant) used in usual emulsion polymerization as required, and finally adding an emulsion polymerization initiator (e.g., hydrogen peroxide or potassium peroxide), followed by emulsion polymerization according to usual procedure. A cation polymer latex containing a quaternary ammonium salt can be prepared by preparing a polymer latex containing a quaternary ammonium salt precursor preferably according to the method described above, and subjecting the polymer latex to the reaction for converting it to the quaternary form.

The dispersing agent used for the emulsion polymerization is a usually employed anionic, cationic, nonionic or amphoteric surface active agent. The surface active agents may be used alone or as a mixture of two or more agents. However, it is not necessary to limit the dispersing agent for emulsion polymerization to these surface active agents.

For example, the anionic surface active agent may also be a sulfate of a higher alkyl represented by the formula $R{-}OSO_3M$ or $R{-}(OCH_2CH_2)_l{-}OSO_3M$ in which R denotes an alkyl group having from 8 to 30 carbon atoms, M denotes an alkali metal or ammonium, and l denotes a positive integer between 0 and 30; or an alkyl benzene sulfonate represented by the formula

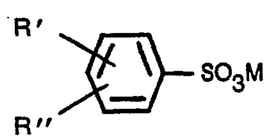

or

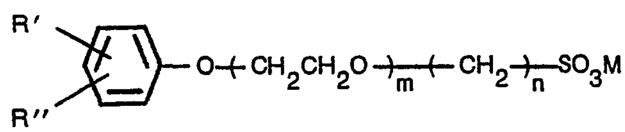

in which R′ designates hydrogen or an alkyl group having from 1 to 18 carbon atoms, R″ designates an alkyl group having from 1 to 18 carbon atoms, M designates an alkali metal or ammonium, m designates a positive integer between 0 and 30, and n designates a positive integer 0, 3 or 4. The nonionic surface active agent may, for example, be polyoxyethylene derivatives, higher fatty acid esters or the like, and the amphoteric surface active agent may be a sulfobetaine type, an amino acid type or the like.

Any particle size of aqueous polymer latex can be obtained by varying the amount of the dispersing agent for emulsion polymerization, the amount of the monomer, the amount of the polymerization initiator, the speed of agitation, the polymerization temperature or the like. The particle size of the polymer latex preferably used in the present invention is within the range between 0.01 µm and 1.0 µm, particularly between 0.02 µm and 0.5 µm.

Examples of the hydrophobic dyes used in the present invention are monoazo, anthraquinone, metal complex type monoazo, diazo, phthalocyanine, triallylmethane dyes or the like which is soluble in an organic solvent, subliming dyes and organic pigments.

Examples of the hydrophobic dyes used in the present invention are listed below for respective colors.

Yellow:
C.I. Solvent Yellow 19 (C.I. 13900A),
C.I. Solvent Yellow 21 (C.I. 18690),
C.I. Solvent Yellow 61,
C.I. Solvent Yellow 80,
Aizen Spilon Yellow GRH Special (Hodogaya Chemical Co., Ltd.),
Diaresin Yellow F (Mitsubishi Chemical Industries Ltd.),
Yellowfluer G (Sumitomo Chemical Co., Ltd.).

Orange:
C.I. Solvent Orange 1 (C.I. 11920),
C.I. Solvent Orange 37,
C.I. Solvent Orange 40,
Diaresin Orange K (Mitsubishi Chemical Industries Ltd.),
Diaresin Orange G (Mitsubishi Chemical Industries Ltd.),
Sumiplast Orange 3G (Sumitomo Chemical Co., Ltd.).

| | |
|---|---|
| Red: | C.I. Solvent Red 8 (C.I. 12715),<br>C.I. Solvent Red 81,<br>C.I. Solvent Red 82,<br>C.I. Solvent Red 84,<br>C.I. Solvent Red 100,<br>Orient Oil Scarlet #308 (Orient Chemical Co., Ltd.),<br>Soldan Red 3R (Chugai Kasei Co., Ltd.),<br>Diaresin Red S (Mitsubishi Chemical Industries Ltd.),<br>Sumiplast Red AS (Sumitomo Chemical Co., Ltd.),<br>Diaresin Red K. (Mitsubishi Chemical Industries Ltd.),<br>Sumiplast Red 3B (Sumitomo Chemical Co., Ltd.),<br>Diaresin Red EL (Mitsubishi Chemical Industries Ltd.),<br>Diaresin Red H (Mitsubishi Chemical Industries Ltd.),<br>Diaresin Red LM (Mitsubishi Chemical Industries Ltd.),<br>Diaresin Red G (Mitsubishi Chemical Industries Ltd.),<br>Aizen Spilon Red GEH Special (Hodogaya Chemical Co., Ltd.). |
| Pink: | Diaresin Pink M (Mitsubishi Chemical Industries Ltd.),<br>Sumiplast Pink R FF (Sumitomo Chemical Co., Ltd.), |
| Violet: | C.I. Solvent Violet 8 (C.I. 42535B),<br>C.I. Solvent Violet 21,<br>Diaresin Violet A (Mitsubishi Chemical Industries Ltd.),<br>Diaresin Violet D (Mitsubishi Chemical Industries Ltd.),<br>Sumiplast Violet RR (Sumitomo Chemical Co., Ltd.). |
| Blue: | C.I. Solvent Blue 2 (C.I. 42563B),<br>C.I. Solvent Blue 11 (C.I. 61525),<br>C.I. Solvent Blue 25 (C.I. 74350),<br>C.I. Solvent Blue 36,<br>C.I. Solvent Blue 55,<br>Aizen Spilon Blue GNH (Hodogaya Chemical Co., Ltd.),<br>Diaresin Blue G (Mitsubishi Chemical Industries Ltd.),<br>Diaresin Blue C (Mitsubishi Chemical Industries Ltd.),<br>Diaresin Blue J. A. H. K. N. (Mitsubishi Chemical Industries Ltd.),<br>Vali Past Blue #2604 (Orient Chemical Co., Ltd.). |
| Green: | C.I. Solvent Green 3 (C.I. 61565). |
| Brown: | C.I. Solvent Brown 3 (C.I. 11360),<br>Diaresin Brown A (Mitsubishi Chemical Industries Ltd.). |
| Black: | C.I. Solvent Black 3 (C.I. 26150),<br>C.I. Solvent Black 5 (C.I. 50415),<br>C.I. Solvent Black 7 (C.I. 50415),<br>C.I. Solvent Black 22,<br>C.I. Acid Black 123 (C.I. 12195),<br>Sumisol Black AR sol (Sumitomo Chemical Co., Ltd.),<br>Vali Fast Black #1802 (Orient Chemical Co., Ltd.). |

Besides the typical examples of the hydrophobic dyes listed above, the hydrophobic dyes used for photographic materials for silver dye bleaching process and for diffusion transfer process are also used effectively in the present invention.

Further, the hydrophobic dyes used in the present invention may be formed by loading the dye precursors in the vinyl polymer latex, and then converting the dye precursors to dyes by a physical or chemical means such as heat treatment, pH change or addition of a developer. This method is effective when the dye itself is sparingly soluble in a solvent for impregnation. The dye precursor may, for example, be a photographic coupler, and the developer may, for example, be a developing agent for photographic purpose.

The ink of the present invention contains, as the main constituents, the vinyl polymer latex containing the hydrophobic dye, and an aqueous medium containing an organic solvent having an HLB value of 9.5 or less. The ink of the present invention may further contain various additives as required. For example, the ink is likely to be stored for long periods of time, it is possible to add an antiseptic agent and a mildew-proofing agent to the ink of the present invention so as to prevent or suppress the growth of bacteria or

mildew in the ink. It is known that various antiseptic agents are useful for this purpose. Preferable antiseptic agents are for example Bacillat 35 (1,3,5-hexahydrotriazine derivative available from Farbwerke Höechst A.G.) and the like.

Further, it is possible to add a surface active agent for the purpose of adjusting the surface tension which governs the wetting of the ink of the present invention. It is desirable that the surface active agent used for this purpose is a nonionic surface active agent or an ionic surface active agent having the same electrostatic charge as that of the surfaces of the polymer latex particles. Examples of the nonionic surface active agent are alkyl ethers and alkyl phenyl ethers of polyoxyalkylene, siloxane-oxialkylene copolymers (e.g., L—5340 available from Union Carbide), and fluorine-based surface active agents (e.g., FC—430 available from 3M).

If a surface active agent having an HLB value of 9.5 or less is used, it is possible to further enhance the permeation of the hydrophobic dye.

The surface active agent is generally used in a proportion of 1% by weight or less, particularly 0.05 to 0.1% by weight, based on the whole ink composition.

In addition, it is also possible to add various inorganic or organic buffers for the purpose of preventing the pH value of the ink from changing due to absorption of carbon dioxide gas mainly from ambient air when the ink is stored in a vessel or exists in the nozzle. Preferable buffers are for example carbonates such as sodium carbonate and potassium carbonate. It is practicable that the buffers are used in a proportion of 0.1 to 5% by weight, preferably 0.1 to 2% by weight based on the whole ink composition.

Further, it is possible to add various kinds of chelating agents for the purpose of masking the metal and metal ion in the ink composition. Typical examples of the chelating agents are sodium glucinate, ethylenediamine tetraacetic aciid (EDTA), disodium salt of EDTA, trisodium salt of EDTA, tetrasodium salt of EDTA, and sodium salt of diethylenetriaminopentaacetic acid.

The chelating agent is generally used in a proportion of 0.1 to 5% by weight based on the whole ink composition.

As described above, the ink composition of the present invention exhibits less bleeding, higher print quality, less risk of nozzle clogging and quick drying property on the printing paper, particularly the printing paper having a high sizing degree which is called the plain paper, as compared with the ink composition in which the dye is dissolved in medium, even in cases when it is a homogeneous ink composition in which a direct dye or an acid dye is dissolved in water and polyhydric alcohols or it is a dispersion type ink composition using a polymer latex.

The present invention is described hereinbelow in further detail by the following non-limitative examples.

## Example 1

To 100 g of a vinyl polymer latex (solid content: 6% by weight) having the composition shown below, 100 g of acetone and 10 g of ethyl acetate were added. To the mixture thus obtained, 6 g of C.I. Solvent Blue 2 (C.I. No. 42563B) was gradually added with stirring by use of a stirrer. After the dye was dissolved uniformly, the solvent was removed on an evaporator to obtain a hydrophobic dye-containing aqueous dispersion having a dye concentration of 6% by weight.

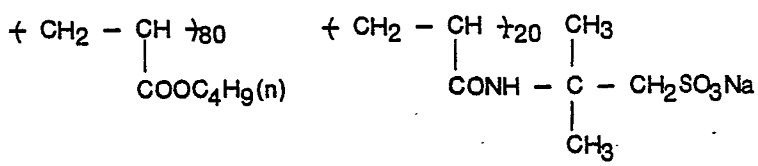

To the aqueous dispersion thus obtained, 140 g of tetraethylene glycol dimethyl ether (HLB = 8.75) was added. The resulting mixture was then stirred uniformly to obtain the ink of the present invention. The ink of the present invention could be filtered through the Toyo Filter Paper No. 131 (available from Toyo Roshi Co., Ltd.) without clogging the filter paper.

The ink of the present invention thus obtained exhibited a viscosity of 7.3 centipoise (cp) ($7.3 \times 10^{-3}$ Pa.sec) at normal temperature (25°C) and a surface tension of 42.5 dyn/cm ($4.25 \times 10^{-2}$ N/m).

## Example 2

In 150 g of acetone, 6 g of C.I. Solvent Red 8 (C.I. No. 12715) was dissolved. Then, 100 g of a vinyl polymer latex (solid content: 8% by weight) having the composition shown below was gradually added dropwise to the resulting solution with stirring by use of stirrer. After adding all latex dropwise, the solvent

was removed on an evaporator to obtain a hydrophobic dye-containing vinyl polymer latex having a dye concentration of 6% by weight.

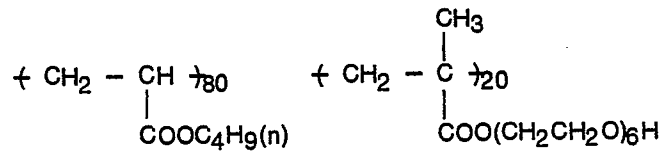

To the thus obtained aqueous dispersion, 140 g of diethylene glycol monobutyl ether (HLB = 7.70) was added. The resulting mixture was then stirred uniformly to obtain the ink of the present invention. The ink of the present invention could be filtered through the Toyo Filter Paper No. 131 without clogging the filter paper. The ink of the present invention thus obtained exhibited a viscosity of 7.6 cp (7.6 × $10^{-}$> Pa.sec) at the normal temperature (25°C) and a surface tension of 30.5 dyn/cm (3.05 × $10^{-2}$ N/m).

## Example 3

To 100 g of a cation polymer latex (solid content: 10% by weight) having the composition shown below, 60 g of diethylene glycol monoethyl ether (HLB = 8.65), 60 g of diethylene glycol diethyl ether (HLB = 7.10), 20 g of diethylene glycol (HLB = 10.20, for viscosity adjustment), and 250 g of tetrahydrofuran were added. To the mixture thus formed, 7.2 g of a blue hydrophobic dye [2 - tert - butylsulfamoyl - 4 - (2 - methylsulfonyl - 4 - nitrophenylazo) - 5 - (3 - aminosulfonylbenzene-sulfonamido) - 1 - naphthol] was gradually added. The dye was dissolved uniformly, and tetrahydrofuran was removed on an evaporator to obtain the ink of the present invention consisting of a hydrophobic dye-containing polymer latex having a dye concentration of 3% by weight. The ink of the present invention filtered through the Toyo Filter Paper No. 131 exhibited a viscosity of 8.0 cp (8.0 × $10^{-3}$ Pa.sec) at normal temperature (25°C) and a surface tension of 38.3 dyn/cm (3.83 × $10^{-2}$ N/m).

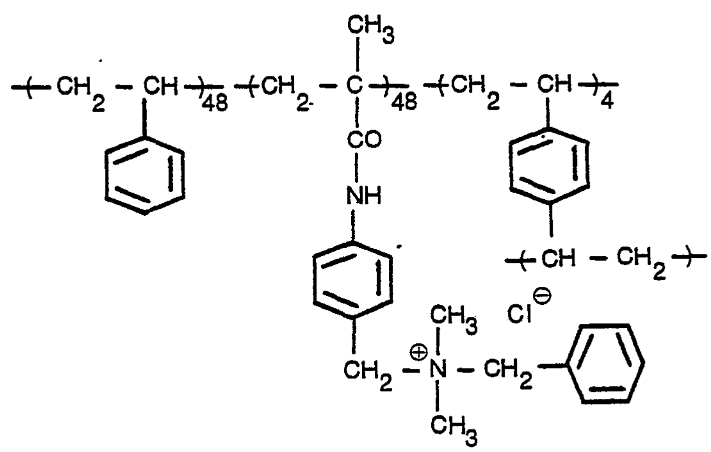

## Comparative Example 1

For comparison, 140 g of ethylene glycol (HLB = 9.85) was added to 100 g of vinyl polymer latex obtained in the same way in Example 1, and the resulting mixture was stirred uniformly to obtain an ink for comparison.

The ink for comparison thus obtained exhibited a viscosity of 7.7 cp (7.7 × $10^{-3}$ Pa.sec) and a surface tension of 47.1 dyn/cm (4.71 × $10^{-2}$ N/m).

## Comparative Example 2

Further, an ink for comparison having the composition described below, in which the solvent used had an HLB value of below 9.5 but which is of homogeneous type, was prepared.

| | |
|---|---|
| C.I. Acid Red 80 | 3 parts |
| Distilled water | 57 parts |
| Diethylene glycol monobutyl ether (HLB = 7.70) | 30 parts |
| Polyethylene glycol #400 | 10 parts |

The ink for comparison thus formed exhibited a viscosity of 5.8 cp (5.8 × $10^{-3}$ Pa.sec) at normal temperature (25°C) and a surface tension of 30.1 dyn/cm (301 × $10^{-2}$ N/m).

Example 4

The ink compositions obtained in the above-described Examples and Comparative Examples were used for ink jet printing on two kinds of printing paper. In the ink jet printing, the ink printing equipment shown in Figs. 1 to 3 of United States Patent No. 4,189,734 was used by adjusting it to the parameters listed in Table 3. The results were as shown in Table 4. From Table 4, it will be clear that the ink of the present invention is superior to those of Comparative Examples.

TABLE 3

| | |
|---|---|
| Printing speed | 2,000 dots/sec. |
| Static pressure | −0.07 Psi ($-4.92 \times 10^{-3}$ $Kg/cm^2$) |
| Pulse peak pressure | 25.3 PSi (1.78 $Kg/cm^2$) |
| Pulse voltage | 120 V |
| Pulse width | 110 $\mu S$ |
| Olifice diameter | 0.003 inch (75 $\mu m$) |

TABLE 4

| Ink composition | Drying speed on paper 1) | | Dot quality | | Nozzle clogging |
|---|---|---|---|---|---|
| | Plain paper* | Absorptive paper** | Plain paper | Absorptive paper | After standing 2 hours in room |
| Ink of Example 1 | Within 1 sec. | Within 1 sec. | Good | Good | None |
| Ink of Example 2 | " | " | " | " | " |
| Ink of Example 3 | " | " | " | " | " |
| Ink of Comparative Example 1 | More than 5 min. | 5 ~ 10 sec. | " | " | " |
| Ink of Comparative Example 2 | Within 1 sec. | Within 1 sec. | Bad (bleeding) | Somewhat bad (large dot diameter) | Occurred |

* The sizing degree of the plain paper was 23 sec.

** The sizing degree of the absorptive paper was 3 sec.

The sizing degree was determined by the Stöckigt method according to JIS P 8122.

1) Drying speed on paper: Time of drying until the ink showed no scratches when touched by fingers.

**Claims**

1. An ink composition for ink jet printing comprising vinyl polymer latex particles containing a hydrophobic dye and which are essentially insoluble in and non-swelling in water, an organic solvent having a hydrophilic-lipophilic balance of 9.5 or less, and an aqueous medium.

2. An ink composition according to Claim 1, in which the organic solvent has a hydrophilic-lipophilic balance of 7.0 to 9.5.

3. An ink composition according to Claim 1 or 2, in which the organic solvent is a monohydric or polyhydric alcohol or their derivatives, a cyclic ether or a lactone or a mixture thereof.

4. An ink composition according to any one of Claims 1 to 3, in which the vinyl polymer latex particles comprise a polymer of an acrylate, a methacrylate, an acrylamide, a methacrylamide, a vinyl ester, a vinyl halide, a vinylidene halide, a vinyl ether, a styrene, an α,β-ethylenically unsaturated monomer, an acrylonitrile, a diacrylate, a dimethacrylate, or a compound having a hydrophilic group or a mixture thereof.

5. An ink composition according to Claim 4, in which the compound having a hydrophilic group is a sulfonate.

6. An ink composition according to Claim 5, wherein the sulfonate is 2-methyl propane sulfonate-2-acrylamide.

7. An ink composition according to Claim 4, in which the compound having a hydrophilic group is a compound having a polyoxyethylene group.

8. An ink composition according to Claim 7 in which the compound having a polyoxyethylene group has the formula [I]:

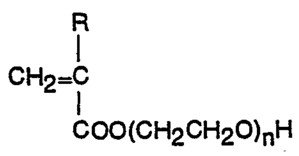

[I]

wherein R represents a hydrogen atom or a methyl group, and n is an integer of 1 to 10.

9. An ink composition according to Claim 4, in which the compound having a hydrophilic group is a quaternary ammonium salt.

10. An ink composition according to Claim 9, in which the quaternary ammonium salt has the formula [II]:

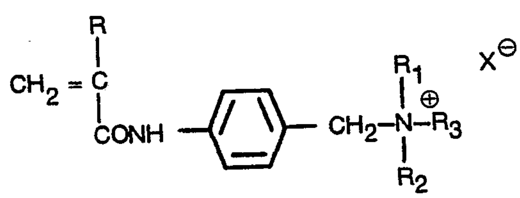

[II]

wherein R represents a hydrogen atom or a methyl group; $R_1$, $R_2$ and $R_3$ independently represent a lower alkyl group; and $X^{\ominus}$ represents an anion.

11. An ink composition according to any one of the preceding claims in which the vinyl polymer latex particles further contain a cross-linkable monomer.

12. An ink composition according to Claim 11, in which the cross-linkable monomer is a divinyl benzene.

13. An ink composition according to any one of the preceding claims in which the vinyl polymer latex particles are synthesized from a radical-polymerizable vinyl monomer by emulsion polymerization.

14. An ink composition according to any one of the preceding claims in which the vinyl polymer latex particles have a particle size of 0.01 to 1.0 μm.

15. An ink composition according to Claim 14, in which the vinyl polymer latex particles have a particle size of 0.02 to 0.5 μm.

16. An ink composition according to any one of the preceding claims, in which the hydrophobic dye is a monoazo, an anthraquinone, a metal complex type monoazo, a diazo, a phthalocyanine or a triallylmethane dye.

17. An ink composition according to any one of the preceding claims, which further comprises a surface active agent.

18. An ink composition according to Claim 17, in which the surface active agent is a nonionic surface

active agent or an ionic surface active agent having the same electrostatic charge as that of the surfaces of the polymer latex particles.

19. An ink composition according to Claim 17, in which the surface active agent is present in an amount of 0.05 to 1% by weight in the ink composition.

20. An ink composition according to any one of the preceding claims, which further comprises a buffer.

21. An ink composition according to Claim 20, in which the buffer is an inorganic buffer or an organic buffer.

22. An ink composition according to Claim 20, in which the buffer is sodium carbonate or potassium carbonate.

23. An ink composition according to any one of Claims 20 to 22, in which the buffer is present in an amount of 0.1 to 5% by weight in the ink composition.

24. An ink composition according to any one of the preceding claims, which further comprises a chelating agent.

25. An ink composition according to Claim 24, in which the chelating agent is sodium glucinate, ethylenediamine tetraacetic acid (EDTA), a disodium salt of EDTA, a trisodium salt of EDTA, a tetrasodium salt of EDTA, or a sodium salt of diethylenetriaminopentaacetic acid.

26. An ink composition according to Claim 24 or 25, in which the chelating agent is present in an amount of 0.1 to 5% by weight in the ink composition.

## Patentansprüche

1. Tinte zum Tintenstrahldrucken, gekennzeichnet durch in Wasser im wesentlichen unlösliche und nichtquellende Vinylpolymerisat-Latexteilchen mit einem hydrophoben Farbstoff, ein organisches Lösungsmittel mit einem hydrophilen/lipophilen Gleichgewicht von 9.5 oder darunter und ein wässriges Medium.

2. Tinte nach Anspruch 1, dadurch gekennzeichnet, daß das organische Lösungsmittel ein hydrophiles/lipophiles Gleichgewicht von 7,0 bis 9,5 aufweist.

3. Tinte nach Ansprüchen 1 oder 2, dadurch gekennzeichnet, daß das organische Lösungsmittel aus einem ein- oder mehrwertigen Alkohol oder Derivat hiervon, einem zyklischen Ether, einem Lacton oder einer Mischung derselben besteht.

4. Tinte nach einem der Ansprüche 1 bis 3, dadurch gekennzeichnet, daß die Vinylpolymerisat-Latexteilchen aus einem Polymerisat eines Acrylats, Methacrylats, Acrylamids, Methacrylamids, Vinylesters, Vinylhalogenids, Vinylidenhalogenids, Vinylethers, Styrols, eines α,β-ethylenisch ungesättigten Monomeren, eines Acrylnitrils, eines Diacrylats, eines Dimethacrylats oder einer Verbindung mit einer hydrophilen Gruppe oder einer Mischung derselben besteht.

5. Tinte nach Anspruch 4, dadurch gekennzeichnet, daß die Verbindung mit einer hydrophilen Gruppe aus einem Sulfonat besteht.

6. Tinte nach Anspruch 5, dadurch gekennzeichnet, daß das Sulfonat aus 2-Methylpropansulfonat-2-acrylamid besteht.

7. Tinte nach Anspruch 4, dadurch ghekennzeichnet, daß die Verbindung mit einer hydrophilen Gruppe aus einer Verbindung mit einer Polyoxyethylengruppe besteht.

8. Tinte nach Anspruch 7, dadurch gekennzeichnet, daß die Verbindung mit einer Polyoxyethylengruppe der Formel:

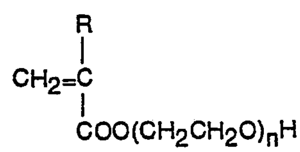

[I]

worin R für ein Wasserstoffatom oder eine Methylgruppe steht und n eine ganze Zahl von 1 bis 10 darstellt, entspricht.

9. Tinte nach Anspruch 4, dadurch gekennzeichnet, daß die Verbindung mit einer hydrophilen Gruppe aus einem quaternären Ammoniumsalz besteht.

10. Tinte nach Anspruch 9, dadurch gekennzeichnet, daß das quaternäre Ammoniumsalz der Formel:

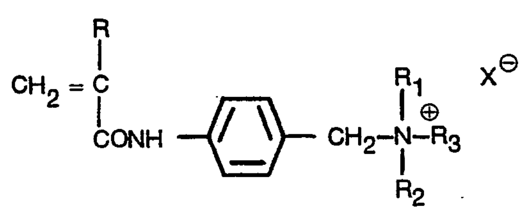

[II]

worin R für ein Wasserstoffatom oder eine Methylgruppe steht, $R_1$, $R_2$ und $R_3$ jeweils eine kurzkettige Alkylgruppe darstellen und $X^\ominus$ ein Anion bedeutet, entspricht.

11. Tinte nach einem der vorhergenden Ansprüche, dadurch gekennzeichnet, daß die Vinylpolymerisat-Latexteilchen zusätzlich ein vernetzbares Monomeres enthalten.

12. Tinte nach Anspruch 11, dadurch gekennzeichnet, daß das vernetzbare Monomere aus einem Divinylbenzol besteht.

13. Tinte nach einem der vorhergehenden Ansprüche, dadurch gekennzeichnet, daß die Vinylpolymerisat-Latexteilchen durch Emulsionpolymerisation aus einem durch Radikalkettenpolymerisation polymerisierbarten Vinylmonomeren hergestellt wurden.

14. Tinte nach einem der vorhergehenden Ansprüche, dadurch gekennzeichnet, daß die Vinylpolymerisat-Latexteilchen eine Teilchengröße von 0,01 bis 1,0 µm aufweisen.

15. Tinte nach Anspruch 14, dadurch gekennzeichnet, daß die Vinylpolymerisat-Latexteilchen eine Teilchengröße von 0,02 bis 0,5 µm aufweisen.

16. Tinte nach einem der vorhergehenden Ansprüche, dadurch gekennzeichnet, daß der hydrophobe Farbstoff aus einem Monoazofarbstoff, einem Anthrachinonfarbstoff, einem Monoazofarbstoff vom Metallkomplextyp, einem Diazofarbstoff, einem Phtalocyaninfarbstoff oder Triallylmethanfarbstoff besteht.

17. Tinte nach einem der vorhergehenden Ansprüche, dadurch gekennzeichnet, daß sie zusätzlich ein oberflächenaktives Mittel bzw. Netzmittel enthält.

18. Tinte nach Anspruch 17, dadurch gekennzeichnet, daß das oberflächenaktive Mittel bzw. Netzmittel aus einem nichtionischen oder ionischen oberflächenaktiven Mittel bzw. Netzmittel derselben elektrostatischen Ladung, wie sie die Oberflächen der Polymerisat-Latex-teilchen aufweisen, besteht.

19. Tinte nach Anspruch 17, dadurch gekennzeichnet, daß die Menge des oberflächenaktiven Mittels bzw. Netzmittels 0,05 bis 1 Gew.-% der Tinte beträgt.

20. Tinte nach einem der vorhergehenden Ansprüche, dadurch gekennzeichnet, daß sie zusätzlich einen Puffer enthält.

21. Tinte nach Anspruch 20, dadurch gekennzeichnet, daß der Puffer aus einem anorganischen oder organischen Puffer besteht.

22. Tinte nach Anspruch 20, dadurch gekennzeichnet, daß der Puffer aus Natriumcarbonat oder Kaliumcarbonat besteht.

23. Tinte nach einem der Ansprüche 20 bis 22, dadurch gekennzeichnet, daß die Menge des Puffers 0,1 bis 5 Gew.-% der Tinte beträgt.

24. Tinte nach einem der vorhergehenden Ansprüche, dadurch gekennzeichnet, daß sie zusätzlich einen Chelatbildner enthält.

25. Tinte nach Anspruch 24, dadurch gekennzeichnet, daß der Chelatbildner aus Natriumglucinat, Ethylendiamintetraessigsäure (EDTA), einem Dinatriumsalz von EDTA, einem Trinatriumsalz von EDTA, einem Tetranatriumsalz von EDTA oder einem Natriumsalz der Diethylentriaminopentaessigsäure besteht.

26. Tinte nach Ansprüchen 24 oder 25, dadurch gekennzeichnet, daß die Menge des Chelatbildners 0,1 bis 5 Gew.-% der Tinte beträgt.

**Revendications**

1. Composition d'encre pour impression par jet d'encre comprenant des particules de latex de polymère vinylique contenant un colorant hydrophobe et qui sont essentiellement insolubles dans l'eau et non-gonflables à l'eau, un solvant organique ayant une balance hydrophile-lipophile de 9,5 ou moins, et un milieu aqueux.

2. Composition d'encre selon la revendication 1, dans laquelle le solvant organique a une balance hydrophile-lipophile de 7 à 9,5.

3. Composition d'encre selon l'une des revendications 1 ou 2, dans laquelle le solvant organique est un alcool monohydrique et polyhydrique ou leurs dérivés, un éther cyclique ou une lactone ou un mélange de ceux-ci.

4. Composition d'encre selon l'une des revendications 1 à 3, dans laquelle les particules de latex de polymère vinylique comprennent un polymère d'un acrylate, un méthacrylate, un acrylamide, un méthacrylamide, un ester vinylique, un halogénure de vinyle, un halogénure de vinylidène, un éther vinylique, un styrène, un monomère insaturé α,β-éthylénique, un acrylonitrile, un diacrylate, un diméthacrylate ou un composé ayant un groupe hydrophile ou un mélange de ceux-ci.

5. Composition d'encre selon la revendication 4, dans laquelle le composé ayant un groupe hydrophile est un sulfonate.

6. Composition d'encre selon la revendication 5, dans laquelle le sulfonate est le 2-méthyl propane sulfonate-2 acrylamide.

7. Composition d'encre selon la revendication 4, dans laquelle le composé ayant un groupe hydrophile est un composé ayant un groupe polyoxyéthylène.

8. Composition d'encre selon la revendication 7, dans laquelle le composé ayant un groupe polyoxyéthylène a la formule:

$$\begin{array}{c} R \\ | \\ CH_2{=}C \\ | \\ COO(CH_2CH_2O)_nH \end{array} \qquad [I]$$

dans laquelle R représente un atome d'hydrogène ou un groupe méthyle et *n* est un nombre entier de 1 à 10.

9. Composition d'encre selon la revendication 4, dans laquelle le composé ayant un groupe hydrophile est un sel d'ammonium quaternaire.

10. Composition d'encre selon la revendication 9, dans laquelle le sel d'ammonium quaternaire a la formule [II]:

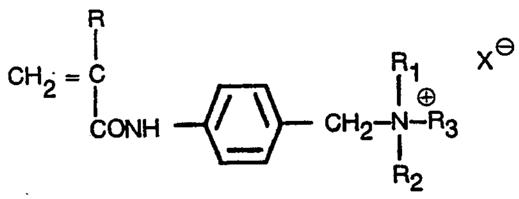

[II]

dans laquelle R représente un atome d'hydrogène ou un groupe méthyle; $R_1$, $R_2$ et $R_3$ représentent indépendamment un groupe alkyle inférieur; et $X^{\ominus}$ représente un anion.

11. Composition d'encre selon l'une quelconque des revendications précédentes, dans laquelle les particules de latex de polymère vinylique contiennent en outre un monomère réticulable.

12. Composition d'encre selon la revendication 11, dans laquelle le monomère réticulable est le divinyl benzène.

13. Composition d'encre selon l'une quelconque des revendications précédentes, dans laquelle les particules de latex de polymère vinylique sont synthétisées par polymérisation en émulsion, à partir d'un monomère vinylique polymérisable par réaction radicalaire.

14. Composition d'encre selon l'une quelconque des revendications précédentes, dans laquelle les particules de latex de polymère vinylique ont des tailles de particules de 0,01 à 1,0 µm.

15. Composition d'encre selon la revendication 14, dans laquelle les particules de latex de polymère vinylique ont une taille de particules de 0,02 à 0,5 µm.

16. Composition d'encre selon l'une quelconque des revendications précédentes, dans laquelle le colorant hydrophobe est un colorant monoazo, un colorant anthraquinone, un colorant monoazo du type complexe métallique, un colorant diazo, un colorant phthalocyanine ou un colorant triallylméthane.

17. Composition d'encre selon l'une quelconque des revendications précédentes, qui contient en outre un agent tensio-actif.

18. Composition d'encre selon la revendication 17, dans laquelle l'agent tensio-actif est un agent tensio-actif non ionique ou un agent tensio-actif ionique ayant la même charge électrostatique que celle des surfaces des particules de latex de polymère.

19. Composition d'encre selon la revendication 17, dans laquelle l'agent tensio-actif est présent en une quantité de 0,05 à 1% en poids de la composition d'encre.

20. Composition d'encre selon l'une quelconque des revendications précédentes, qui contient en outre un tampon.

21. Composition d'encre selon la revendication 20, dans laquelle le tampon est un tampon inorganique ou un tampon organique.

22. Composition d'encre selon la revendication 20, dans laquelle le tampon est du carbonate de sodium ou du carbonate de potassium.

23. Composition d'encre selon l'une quelconque des revendications 20 à 22, dans laquelle le tampon est présent en une quantité de 0,1 à 5% en poids de la composition d'encre.

24. Composition d'encre selon l'une quelconque des revendications précédentes, qui contient en outre un agent de chélation.

25. Composition d'encre selon la revendication 24, dans laquelle l'agent de chélation est du glucinate de sodium, de l'acide éthylènediamine tétraacétique (EDTA), un sel de sodium de l'EDTA, un sel de trisodium de l'EDTA, un sel de tétrasodium de l'EDTA, ou un sel de sodium de l'acide diéthylènetriaminopentaacétique.

26. Composition d'encre selon la revendiction 24 ou 25, dans laquelle l'agent de chélation est présent en une quantité de 0,1 à 5% en poids de la composition d'encre.